# EUROPÄISCHE PATENTANMELDUNG

(11) **EP 1 063 022 A2**
(43) Veröffentlichungstag der Anmeldung: **27.12.2000**
(21) Anmeldenummer: 00250192.2
(22) Anmeldetag: 22.06.2000
(51) Int. Cl.: B21B 28/04

(54) **Verfahren und Vorrichtung zum Nachbearbeiten der in Warmbandwalzgerüsten eingebauten Walzen**

(30) Priorität: 24.06.1999 DE 19929717
(71) Anmelder: SMS Demag AG, 40237 Düsseldorf (DE)
(72) Erfinder: Figge, Dieter, 45147 Essen (DE); Jollet, Peter, 40477 Düsseldorf (DE)
(74) Vertreter: Meissner, Peter E., Dipl.-Ing.

(57) **Zusammenfassung**

Die Erfindung betrifft ein Verfahren und eine Vorrichtung zum Nachbearbeiten der in Warmbandwalzgerüsten eingebauten Walzen, insbesondere der Arbeitswalzen in Quarto-Walzgerüsten mittels über die Ballenlänge der zu bearbeitenden Walze bewegbarer Werkzeuge, die zusammen mit einem Werkzeugträger auf einer Führungsbahn parallel zur Walzenachse oszillierend beweg bar sowie quer zu dieser anstellbar sind. Dabei werden als Werkzeuge CNC gesteuerte Drehmeissel (16, 41, 42, 43) mit hochfesten verschleißarmen Werkzeugschneiden eingesetzt.

## Beschreibung

Die Erfindung betrifft ein Verfahren zum Nachbearbeiten der in Warmbandwalzgerüsten eingebauten Walzen, insbesondere der Arbeitswalzen in Quarto-Walzgerüsten mittels über die Ballenlänge der zu bearbeitenden Walze bewegbarer Werkzeuge, die zusammen mit einem Werkzeugträger auf einer Führungsbahn parallel zur Walzenachse längs bewegbar sowie quer zu dieser anstellbar sind.

Die bekannten Verfahren zur Nachbearbeitung der Arbeitswalzen von Warmbandwalzgerüsten im eingebautem Zustand arbeiten grundsätzlich mit Schleifeinrichtungen, wobei für die Positionierung der Schleifwerkzeuge eine Anpreßdruckregelung verwendet wird. Dabei wird die z.B. topfförmige Schleifscheibe mit geregelter Anpreßkraft gegen die Arbeitswalze gedrückt, um das Zeitspanvolumen zu verändern.

Die bekannte Anpreßdruckregelung stößt manchmal an die Grenze des Machbaren, weil Störkräfte aus dem Schleifprozeß ein sogenanntes regeneratives Rattern erzeugen, d.h. Schwingungen, die dazu führen, daß nur ein Bruchteil der installierten Leistung des Schleifkopfes zur Zerspanung eingesetzt werden kann. Auch ist eine gezielte Nachbearbeitung einer örtlich verschlissenen Walze mit Anpreßdruckregelung nicht möglich; denn die Steuerung der Topfscheibe folgt dem Profil der verschlissenen Walze.

Aufgabe der vorliegenden Erfindung ist es, ein einfaches Verfahren und eine Vorrichtung zur Nachbearbeitung der im Walzgerüst eingebauten Arbeitswalzen zu schaffen, mit dem bzw. der beliebige Konturen auf der Walze herstellbar sind und eine Änderung des Walzprofils möglich ist.

Zur Lösung der Aufgabe wird vorgeschlagen, daß die Nachbearbeitung der Walzen spanabhebend mittels CNC-positionsgesteuerter Drehmeissel erfolgt, deren Werkzeugschneiden die Oberfläche der rotierend angetriebenen Walze abtragen, während sie längs des Walzballens auf einer vorgegebenen Bahn geführt werden.

Durch die Erfindung wird erstmals bei einem gattungsgemäßen Verfahren vorgeschlagen, statt einer Anpreßdruckregelung für einen Schleifkopf nunmehr eine Positionssteuerung für ein spanabhebendes Werkzeug einzusetzen. Mit einem solchen Verfahren lassen sich beliebige Konturen auf der Walze herstellen, indem eine im Werkzeugmaschinenbau millionenfach bewährte CNC-Steuerung mit drei Achsen angewendet wird.

Nach einem anderen Merkmal der Erfindung ist vorgesehen, daß die Nachbearbeitung der Walzen während der Walzpausen erfolgt, wobei der Hauptantrieb der Walzen bei in Umfangsrichtung der Walzen fixierten Drehmeisseln den zum Spanabheben erforderlichen Drehantrieb des Werkstückes herbeiführt. Durch Benutzung des ohnehin vorhandenen Antriebes der Walzen entfallen zusätzliche Drehantriebe für das spanabhebend zu bearbeitende Werkstück, nämlich die Walze, die beispielsweise auf eine Schnittgeschwindigkeit von 210 m/min gebracht wird. Die Bearbeitung in einer Walzpause ist kein Nachteil, solange sie in der gleichen Zeit (8-10 min) durchgeführt wird, wie sie sonst für einen Walzenwechsel benötigt wird.

Ein weiteres Merkmal der Erfindung dient der Genauigkeit des Bearbeitungsergebnisses. Es wird nämlich vorgeschlagen, die zu bearbeitende Walze während ihrer Bearbeitung radialspielfrei im Walzenständer festzulegen. Dadurch kann eine sehr genaue Positionssteuerung des Werkzeuges vorgenommen werden, die sowohl von mechanischen als auch thermischen Einflüssen freigehalten wird.

Die Werkzeuge müssen für eine exakte Positionssteuerung nach im Rechner abgelegten Vorgaben zu Beginn der Walzenbearbeitung in ihre Ausgangsposition gebracht werden. Deshalb wird nach einen anderen Merkmal der Erfindung vorgeschlagen, zum Kalibrieren und Nullen des Systems die Werkzeugschneiden oder diesen zugeordnete Referenzflächen gegen die Walzenoberfläche zu führen und deren dabei erfaßte Position in dem Steuerrechner als Startposition für den im Rechner gespeicherten Bearbeitungsablauf zu verwenden. Im Anschluß daran kann eine Positioniersteuerung zur Steuerung der Abtrageeinheit zum Einsatz kommen, mit der jede gewünschte Kontur auf der Walze zu erzeugen ist.

Eine Vorrichtung zum Nachbearbeiten ist dadurch gekennzeichnet, daß als Werkzeuge CNC gesteuerte Drehstähle mit hochfesten verschleißarmen Werkzeugschneiden eingesetzt werden. Somit kann mit der erfindungsgemäßen Vorrichtung ein Drehverfahren angewendet werden, bei dem das Werkstück (Walze) dreht und das Werkzeug (Drehmeißel) feststeht. Verfahrensgemäß ist das Werkzeug in zwei Achsen (längs und quer) verfahrbar; die Wege sind über die Steuerung programmierbar.

Vorzugsweise bestehen die Werkzeugschneiden aus polykristallinem Bornitrid (PKB) oder aus Kubischem Bornitrit (CBN). Diese Werkstoffe sind äußerst verschleißarm und daher für die benötigte Aufgabe bestens geeignet. Polykristallines Bornitrid z.B. hat praktisch keinen meßbaren Verschleiß, so daß die Standzeit des Werkzeuges mit 1,5 bis 3 h angenommen werden kann. Das polykristalline Bornitrid ist als Schneidstoff für harte bzw. zähharte Eisenwerkstoffe gut geeignet und kann auch die sonst nur durch Schleifen erreichbaren hohen Oberflächengüten erzielen. Die als ausgeglühte Bröckelspäne anfallenden Walzenabfälle können durch gezielte Wasserkühlung einfach seitlich weggespült werden.

Es ist auch sinnvoll die Werkzeugschneiden aus, ggf. whiskerverstärktem Aluminiumoxid Al₂O₃ herzustellen, das ebenfalls gute Werkzeugeigenschaften aufweist.

Besonders gute Bearbeitungsleistungen lassen sich erreichen, wenn mehrere, vorzugsweise zwei unabhängig steuerbare Werkzeuge gleichzeitig im Eingriff sind, mit denen jeweils ein anderer benachbarter Bereich der Walzballenlänge nacharbeitbar ist. Bei den geringen erforderlichen Schnittiefen im Schlichtbereich lassen sich praktisch unsichtbare Übergänge in den aneinandergrenzenden Bearbeitungsbereichen erzielen. Während des Längsweges können beide Werkzeuge bei getrennter Planführung und separaten Planantrieben unterschiedliche Bombierungen auf der Walze erzeugen.

Um die Verfügbarkeit der Werkzeuge zu erhöhen und bessere Leistungen zu erzielen, wird vorgeschlagen, daß jedes im Eingriff befindliche Werkzeug zusammen mit nicht im Eingriff befindlichen Ersatzwerkzeugen auf einem als Revolverkopf ausgebildetem Werkzeugträger angeordnet ist, der auf der Führungsbahn parallel zur Walzenachse bewegbar sowie quer zu dieser anstellbar ist. Durch einfaches Verschwenken des Revolverkopfes lassen sich am Ende der Standzeit eines Werkzeuges jeweils andere Werkzeuge nach einander zum Einsatz bringen. Das Schwenken und Klemmen des Drehkopfes erfolgen vorzugsweise über einen Schrittmotor sowie einen Indexierbolzen mit Hydrozylinder-Antrieb.

Der Revolverkopf ist erfindungsgemäß auf einem quer zur Walze verschiebbaren Planschieber angeordnet, der seinerseits mittels eines Schlittens längs der Walze auf der Führungsbahn bewegbar ist.

Jede Führungsbahn ist an den Walzgerüstständern befestigt.

Aufgrund der wechselnden Temperaturverhältnisse in einem Warmwalzwerk verändert sich auch die Lage der Führungssysteme für die Drehmaschine, wenn nicht besondere Maßnahmen ergriffen werden.

Deshalb ist vorgesehen, daß zur Verhinderung von Deformationen infolge Strahlungswärme aus dem Walzwerk das wassergekühlte Maschinenbett der Vorrichtung aus dehnungsarmen Blechen geschweißt ist. Das Bett für die Längsbewegung kann vorzugsweise als wassergekühlte Hohlträgerkonstruktion aus einer INVAR-Nickellegierung mit 36 % Nickel und 64 % Eisen ausgeführt sein. Die Führung in Form einer Brücke ist mit einem Festlager an dem einen Ständer befestigt, während die Brücke auf der anderen Seite als Loslager ausgebildet ist, damit unterschiedliche Dehnungen von Gerüst (aus Normalstahl) und Drehmaschinenbett (aus INVAR) ausgeglichen werden. Die Querführungen sind ebenfalls wassergekühlt und aus INVAR gefertigt.

Zum Schutz gegen Wasser, Zunder und Dreck sind die Führungsbahnen mit Abstreifern aus Metall versehen und zusätzlich mit Teleskop-Abdeckungen geschützt.

Erfindungsgemäß ist das Maschinenbett der Vorrichtung in unverrückbarer, fixierter Stellung zwischen den Walzgerüstständern, den A-Walzen-Wechsel ohne Veränderung der Lage des Maschinenbettes ermöglichend befestigt. Dadurch ist ein Walzenwechsel ohne Veränderung der Lage des Maschinenbettes möglich, wenn die Ohren des Einbaustückes an dem Maschinenbett vorbei passen.

Einbaustücke haben normal Spiel im Ständerfenster. Zur spielfreien Festlegung der Walze während deren Bearbeitung sind nach einem weiteren Merkmal der Erfindung mit den Walzeneinbaustücken zusammenwirkende Hydraulikzylinder in den Biegeblöcken vorgesehen, mit denen dieses Spiel zwischen den Walzeneinbaustücken und deren Widerlagern beseitigbar ist.

Beim Walzen ist ein großes Lagerspiel der Walzenlagerung erforderlich. Dieses Lagerspiel stört bei der Bearbeitung der Walze, weil es die Genauigkeit negativ beeinflußt. Um das zu vermeiden ist zur spielfreien Lagerung der Walze während der Drehbearbeitung eine spieleinstellbare Walzenlagerung vorgesehen. Das Lagerspiel ist ferngesteuert veränderbar und gestattet beim Walzen ein großes Spiel, beim Drehen ein extrem kleines Spiel einzustellen.

Zur spielfreien Festlegung der Walze während deren Bearbeitung wird eine einstellbare Walzenlagerung über Kegelrollenlager empfohlen, die eine ferngesteuerte Lagerspiel-Einstellung zuläßt. Als Alternative ist auch vorgesehen, Stützrollen auf der dem Werkzeug abgewandten Seite der Walze anzuordnen, die ein Zurückweichen der Walze aus dem Bereich der Werkzeugschneide verhindern.

Da die Toleranzen der Breite der Einbaustücke unvermeidlich variieren, sind zur Synchronisierung und zur Nullung des Meßsystemes an dem Revolverkopf in Kontakt mit der Walze bringbare Festanschläge vorgesehen sind, mit denen die Position der Werkzeugschneiden festlegbar und das System kalibrierbar ist. Vor jedem Arbeitswalzenwechsel fährt der Revolverkopf gegen die Arbeitswalze, dadurch wird das Meßsystem der Einrichtung auf Null gesetzt und die Synchronisierung herbeigeführt.

Die erfindungsgemäße Lösung hat eine Reihe deutlicher Vorteile gegenüber dem Stand der Technik. Mit der Positioniersteuerung läßt sich jede gewünschte Profilkontur auf die Walze übertragen. Da in der Regel die Kontur der Walze bekannt ist, kann man den durch Wärmeeintrag während des Walzens entstehenden thermischen Ballen mit Hilfe einer SET-UP Rechnung des Walzgerüstes vorausberechnen und die Koordinaten des Walzenballens mit der Positioniersteuerung entsprechend korrigieren. Die Verwendung einer bewährten CNC-Steuerung ermöglicht den Einsatz einer definierten unveränderlichen Werkzeugschneide, mit der -im Gegensatz zum Schleifen- beliebige Konturen auf die Walze aufgebracht werden können. Dabei ist ein gesonderter Werkzeugantrieb nicht erforderlich, weil der Hauptantrieb der Walzen gleichzeitig als Werkstückantrieb verwendet wird. Die Oberflächenqualität ist mit dem Schleifen vergleichbar. Die Prozeßsteuerung ist einfacher als beim Schleifen.

Ein Ausführungsbeispiel der Erfindung ist in der Zeichnung dargestellt und wird nachfolgend beschrieben. Es zeigt:
- Figur 1: eine erfindungsgemäße Vorrichtung als Vertikalschnitt im Gerüst,
- Figur 2: eine erfindungsgemäße Vorrichtung im Horizontalschnitt,
- Figur 3: eine Einrichtung zur Beseitigung des Spiels zwischen Einbaustücken und Ständern und
- Figur 4: eine Einrichtung zur Beseitigung des Lagerspiels in den A-Walzenlagern.

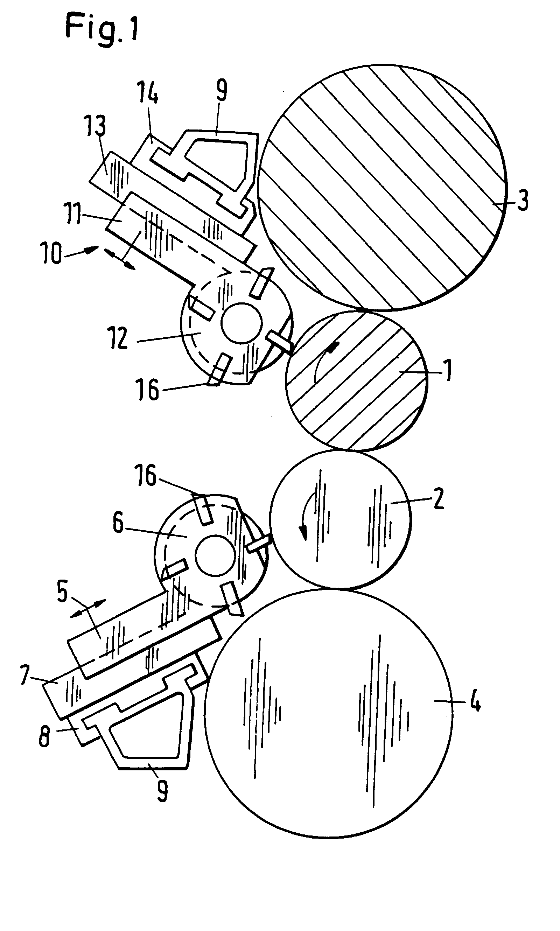

Figur 1 zeigt schematisch einen Vertikalschnitt durch das Walzgerüst. Man erkennt die Arbeitswalzen 1 und 2 und die Stützwalzen 3 und 4, ferner einen unteren Planschitten 5 mit Revolverkopf 6 der auf einer Führungsbahn 7 beweglich ist. Der Planschlitten 5 sitzt auf einem Längsschlitten 8, der parallel zur Walzenachse auf einem Bett 9 verfahrbar ist.

Analog erkennt man die Bearbeitungseinheit 10 für die Bearbeitung der oberen Arbeitswalze 1, abgestützt auf der oberen Stützwalze 3. Sie besteht aus dem oberen Planschlitten 11 mit Revolverkopf 12, der auf einer Führungsbahn 13 senkrecht zur Walzenachse beweglich ist.

Der Planschlitten 11 ist auf dem Längsschlitten 14 befestigt, der parallel zur Walzenachse verfahrbar ist. Beide Revolverköpfe 6 und 12 sind mit den zur Walzenbearbeitung notwendigen Drehmeisseln 16 bestückt.

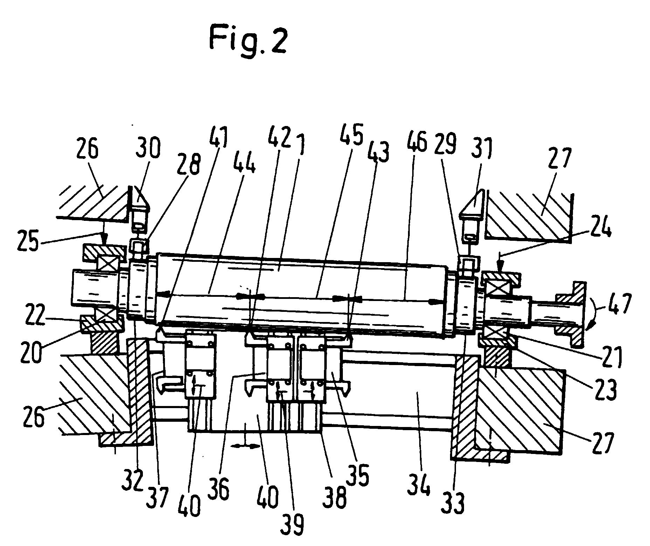

Figur 2 zeigt in einem Horizontalschnitt eine Bearbeitungseinheit schematisch. Man erkennt die Arbeitswalze 1, die in den Arbeitswalzenlagern 20 und 21 gelagert ist, die wiederum in den Einbaustücken 22 und 23 sitzen.

Die Einbaustücke 22, 23 werden durch eine äußere Kraft 24, 25 gegen eine Referenzfläche in den Walzenständern 26 und 27 gedrückt. Dadurch ist die Lage der Arbeitswalze für die folgende Feinbearbeitung im Gerüst festgelegt.

Um das Spiel in den Arbeitswalzenlagern 20, 21 zu beseitigen, werden hydraulisch andrückbare Rollen 28, 29 vorgeschlagen, die sich in Halterungen 30, 31 an Walzenständer abstützen und gegen Lünettenflächen auf der Walze 32, 33 drücken.

Figur 2 zeigt weiterhin das Maschinenbett 34 mit 3 Revolverköpfen 35, 36, 37, die auf drei Planschlitten 38, 39, 40 befestigt sind. Die drei Planschlitten 38, 39, 40 sitzen auf einem gemeinsamen Längsschlitten 14, 15 der auf dem Maschinenbett 34 längsverfahrbar ist.

Das Maschinenbett 34 ist mit den Walzenständern 26, 27 verschraubt und bildet durch die vorhandene Wasserkühlung und den INVAR-Werkstoff eine verformungsarme Basis.

In den drei Revolverköpfen 35, 36, 37 sind Drehmeissel 41, 42, 43 befestigt, die die konturierte Walzenfeinbearbeitung durch kombiniertes Bewegungen von Längsschlitten 14, 15 und Einzelbewegung der drei Planschlitten 38, 39, 40 ausführen. Dabei legen die Werkzeuge (Drehmeissel 41, 42, 43) die identischen Längswege 44, 45, 46 zurück, die ein Drittel der Ballenlänge der Walze betragen. Die Drittelung des Längsweges führt zu einer Reduzierung der Bearbeitungshauptzeit.

Die Walze wird über die Kupplung 47 drehend angetrieben.

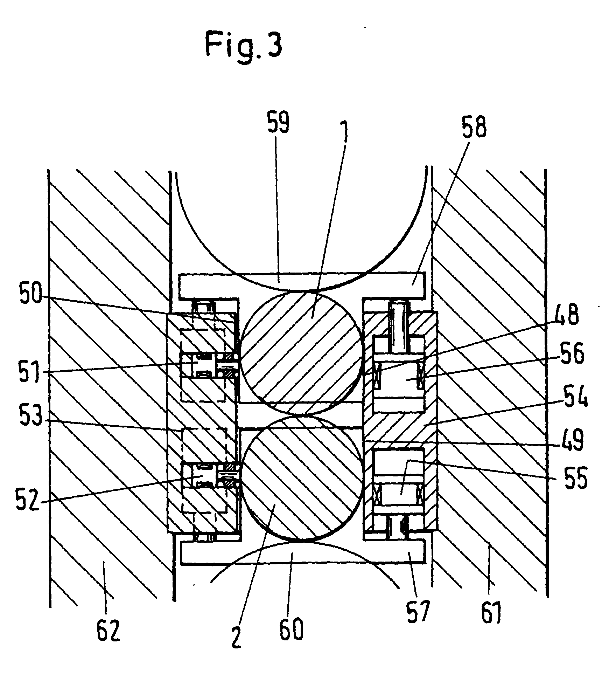

Figur 3 zeigt in einem Vertikalschnitt durch das Walzgerüst die Einrichtung, mit der die Einbaustücke 59, 60 gegen eine Referenzfläche 48, 49 zur Anlage gebracht werden, um Spiel 50 zu beseitigen. Dazu werden die Kolben 51, 52 hydraulisch beaufschlagt, die in dem linken Biegeblock 53 geführt sind.

Im rechten Biegeblock 54 erkennt man die vertikalen Biegezylinder 55, 56, die gegen die Ohren 57, 56 der Einbaustücke 59, 60 drücken. In den Einbaustücken sind die Arbeitswalzen 1 und 2 gelagert. Die Biegeblöcke 53, 54 sind in den Walzenständern 61, 62 verschraubt.

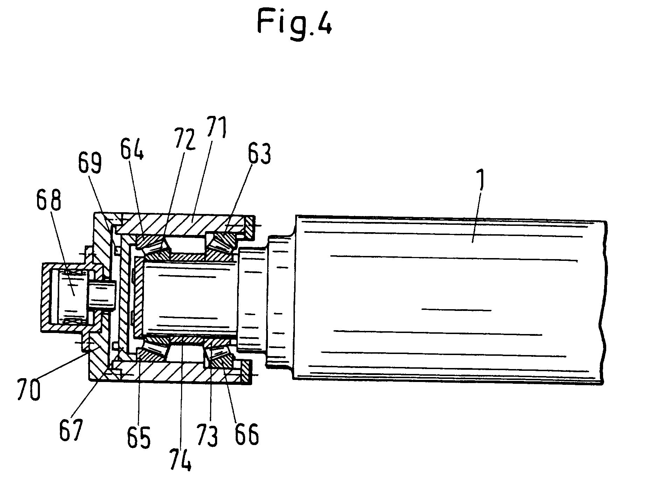

Figur 4 zeigt eine Methode zur Spielbeseitigung in den Walzenlagern. Sie besteht aus einer Einrichtung zum ferngesteuerten Einstellen des Lagerspiels in einer Arbeitswalzenlagerung. Wählbar ist große Lagerluft für das Warmwalzen und kleine Lagerluft für die Walzenfeinbearbeitung.

Man erkennt die Arbeitswalze 1 und die Lagerung auf einer Seite über zwei Kegelrollenlager 63, 64. Die Außenringe 65, 66 dieser Kegelrollenlager sind stationär im Gehäuse gehalten und axial verschiebbar. Durch die axiale Verschiebbarkeit wird die Lagerluft bestimmt. Das axiale Verschieben wird über eine Distanzplatte 67 vorgenommen, die wiederum über einen Hydrozylinder 68 verstellt werden kann: voller Druck = kleinstes Lagerspiel, Druck Null = größtes Lagerspiel. Die Distanzplatte 67 setzt sich mit ihren Anschlägen 69 gegen den Deckel 70 des Einbaustückes 71.

Die Innenringe 72, 73 der Kegelrollenlager sind über eine Distanzbuchse 74 axial festgelegt.

### Referenzliste

- 1 und 2: Arbeitswalzen
- 3 und 4: Stützwalzen
- 5: Planschitten
- 6: Revolverkopf
- 7: Führungsbahn
- 8: Längsschlitten
- 9: Bett
- 10: Bearbeitungseinheit
- 11: Planschlitten
- 12: Revolverkopf
- 13: Führungsbahn
- 11: Planschlitten
- 14 , 15: Längsschlitten
- 16: Drehmeissel
- 20, 21: Arbeitswalzenlager
- 22, 23: Einbaustücke
- 24, 25: äußere Kraft
- 26 und 27: Walzenständer
- 28, 29: Rollen
- 30, 31: Halterungen
- 32, 33: Walze
- 34: Maschinenbett
- 35, 36, 37: Revolverköpfe
- 38, 39, 40: Planschlitten
- 41, 42, 43: Drehmeissel
- 44, 45, 46: Längswege
- 47: Kupplung
- 48, 49: Referenzfläche
- 50: Spiel
- 51, 52: Kolben
- 53: Biegeblock
- 54: Biegeblock
- 55, 56: vertikaler Biegezylinder
- 57, 58: Ohren
- 59, 60: Einbaustücke
- 61, 62: Walzenständer
- 63, 64: Kegelrollenlager
- 65, 66: Außenringe
- 67: Distanzplatte
- 68: Hydrozylinder
- 69: Anschläge
- 70: Deckel
- 71: Einbaustück
- 72, 73: Innenringe
- 74: Distanzbuchse

## Patentansprüche

1. Verfahren zum Nachbearbeiten der in Warmbandwalzgerüsten eingebauten Walzen, insbesondere der Arbeitswalzen in Quarto-Walzgerüsten mittels über die Ballenlänge der zu bearbeitenden Walze beweg barer Werkzeugen, die zusammen mit einem Werkzeugträger auf einer Führungsbahn parallel zur Walzenachse längs bewegbar sowie quer zu dieser anstellbar sind,
dadurch gekennzeichnet,
daß die Nachbearbeitung der Walzen spanabhebend mittels CNC-positionsgesteuerter Drehmeissel erfolgt, deren Werkzeugschneiden die Oberfläche der rotierend angetriebenen Walzen abtragen, während sie längs und quer zum Walzballen auf einer vorgegebenen Bahn geführt werden.

2. Verfahren zum Nachbearbeiten der in Warmbandwalzgerüsten eingebauten Walzen nach Anspruch 1,
dadurch gekennzeichnet,
daß die Nachbearbeitung der Walzen während der Walzpausen erfolgt, wobei der Hauptantrieb der Walzen bei in Umfangsrichtung der Walzen fixierten Drehmeisseln die zum Spanabheben erforderliche Drehbewegung der Walze herbeiführt.

3. Verfahren zum Nachbearbeiten der in Warmbandwalzgerüsten eingebauten Walzen nach Anspruch 1 und 2,
dadurch gekennzeichnet,
daß die zu bearbeitende Walze während der Drehoperation durch zusätzliche seitlich wirkende Hydrozylinder in den Biegeblöckenradialspielfrei im Walzenständer festgelegt wird

4. Verfahren zum Nachbearbeiten der in Warmbandwalzgerüsten eingebauten Walzen nach einem der Ansprüche 1 bis 3,
dadurch gekennzeichnet,
daß zum Kalibrieren und Nullen des Systems die Werkzeugschneiden oder diesen zugeordnete Referenzflächen gegen die Walzenoberfläche geführt und deren dabei erfaßte Position in dem Steuerrechner als Startposition für den im Rechner gespeicherten Bearbeitungsablauf verwendet werden.

5. Vorrichtung zum Nachbearbeiten der in Warmbandwalzgerüsten eingebauten Walzen, insbesondere der Arbeitswalzen in Quarto-Walzgerüsten mittels über die Ballenlänge der zu bearbeitenden Walze bewegbarer Werkzeuge, die zusammen mit einem Werkzeugträger auf einer Führungsbahn parallel zur Walzenachse oszillierend bewegbar sowie quer zu dieser anstellbar sind,
dadurch gekennzeichnet,
daß als Werkzeuge CNC gesteuerte Drehmeissel (16, 41, 42, 43) mit hochfesten verschleißarmen Werkzeugschneiden eingesetzt werden.

6. Vorrichtung zum Nachbearbeiten der in Warmbandwalzgerüsten eingebauten Walzen nach Anspruch 5,
dadurch gekennzeichnet,
daß die Werkzeugschneiden der Drehmeissel (16, 41, 42, 43) aus polykristallinem Bornitrid (PKB) bestehen.

7. Vorrichtung zum Nachbearbeiten der in Warmbandwalzgerüsten eingebauten Walzen nach Anspruch 5,
dadurch gekennzeichnet,
daß die Werkzeugschneiden der Drehmeissel (16, 41, 42, 43) aus Kubischem Bornitrit (CBN) bestehen.

8. Vorrichtung zum Nachbearbeiten der in Warmbandwalzgerüsten eingebauten Walzen nach Anspruch 5,
dadurch gekennzeichnet,
daß die Werkzeugschneiden der Drehmeissel (16, 41, 42, 43) aus ggf. whiskerverstärktem Aluminiumoxid Al₂O₃ bestehen.

9. Vorrichtung zum Nachbearbeiten der in Warmbandwalzgerüsten eingebauten Walzen nach einem der Ansprüche 5 bis 8,
dadurch gekennzeichnet,
daß mehrere, vorzugsweise zwei unabhängig steuerbare Werkzeuge Drehmeissel (16, 41, 42, 43) gleichzeitig im Eingriff sind, mit denen jeweils ein anderer benachbarter Bereich der Walzballenlänge nacharbeitbar ist.

10. Vorrichtung zum Nachbearbeiten der in Warmbandwalzgerüsten eingebauten Walzen nach einem der Ansprüche 5 bis 9,
dadurch gekennzeichnet,
daß jedes im Eingriff befindliche Werkzeug Drehmeissel (16, 41, 42, 43) zusammen mit nicht im Eingriff befindlichen Ersatzwerkzeugen auf einem als Revolverkopf (35, 36, 37) ausgebildetem Werkzeugträger angeordnet ist, der auf der Führungsbahn (7) parallel zur Walzenachse bewegbar sowie quer zu dieser anstellbar ist.

11. Vorrichtung zum Nachbearbeiten der in Warmbandwalzgerüsten eingebauten Walzen nach einem der Ansprüche 5 bis 10,
dadurch gekennzeichnet,
daß der Revolverkopf (35, 36, 37) auf einem quer zur Walze (1, 2) verschiebbaren Planschlitten (11, 38, 39, 40) angeordnet ist der seinerseits mittels eines Längsschlittens (14, 15) längs der Walze (1,2) auf der Führungsbahn (13) bewegbar ist.

12. Vorrichtung zum Nachbearbeiten der in Warmbandwalzgerüsten eingebauten Walzen nach einem der Ansprüche 5 bis 11,
dadurch gekennzeichnet,
daß zur Verhinderung von Deformationen infolge Strahlungswärme aus dem Walzwerk das wassergekühlte Maschinenbett (34) der Vorrichtung aus dehnungsarmen Blechen geschweißt ist.

13. Vorrichtung zum Nachbearbeiten der in Warmbandwalzgerüsten eingebauten Walzen nach einem der Ansprüche 5 bis 12,
dadurch gekennzeichnet,
daß das Maschinenbett (34) der Vorrichtung in unverrückbarer, fixierter Stellung zwischen den Walzgerüstständern, den A-Walzen-Wechsel ohne Veränderung der Lage des Maschinenbettes ermöglichend befestigt ist.

14. Vorrichtung zum Nachbearbeiten der in Warmbandwalzgerüsten eingebauten Walzen nach einem der Ansprüche 5 bis 12,
dadurch gekennzeichnet,
daß zur spielfreien Festlegung der Walze (1, 2) während deren Bearbeitung mit den Walzeneinbaustücken (59, 60) zusammenwirkende Hydraulikzylinder (51, 52) in den Biegeblöcken vorgesehen sind, mit denen das Spiel zwischen den Walzeneinbaustücken (59, 60) und deren Führung im Walzenständer (61, 62) beseitigbar ist.

15. Vorrichtung zum Nachbearbeiten der in Warmbandwalzgerüsten eingebauten Walzen nach einem der Ansprüche 5 bis 13,
dadurch gekennzeichnet,
daß zur spielfreien Lagerung der Walze (1, 2) während der Drehbearbeitung eine spieleinstellbare Walzenlagerung vorgesehen ist.

16. Vorrichtung zum Nachbearbeiten der in Warmbandwalzgerüsten eingebauten Walzen nach einem der Ansprüche 5 bis 14,
dadurch gekennzeichnet,
daß an dem Revolverkopf (12, 35, 36, 37) in Kontakt mit der Walze (1, 2) bringbare Festanschläge vorgesehen sind, mit denen die Position der Schneiden der Drehmeissel (16) festlegbar und das System kalibrierbar ist.
